# FASCICULE DE BREVET EUROPEEN

(11) **EP 0 716 320 B1**
(45) Date de publication et mention de la délivrance du brevet: **19.07.2000**
(21) Numéro de dépôt: 95402758.7
(22) Date de dépôt: 07.12.1995
(51) Int. Cl.: G01V 3/28

(54) **Dispositif de mesure à induction en présence de parois métalliques magnétiques**
Gerät für Induktionsmessungen durch metallische magnetische Wände
Apparatus for induction measurements through metallic magnetic walls

(30) Priorité: 09.12.1994 FR 9414848
(43) Date de publication de la demande: 12.06.1996
(73) Titulaire: COMMISSARIAT A L'ENERGIE ATOMIQUE, 75015 Paris (FR)
(72) Inventeur: Locatelli, Marcel, F-38330 Montbonnot Saint-Martin (FR); Chaillout, Jean-Jacques, F-38960 Saint-Etienne de Crossey (FR); Brochier, Michel, F-38560 Jarrie (FR)
(74) Mandataire: Moutard, Pascal Jean

(56) Documents cités:
- WO-A-95/00839
- US-A- 2 770 773
- US-A- 3 277 363
- US-A- 4 748 415
- US-A- 5 038 107
- US-A- 5 283 520

## Description

### Domaine technique

La présente invention se rapporte aux domaines de la caractérisation des formations géologiques traversées par un puits tubé. En particulier, la caractérisation peut être réalisée à l'aide d'une technique d'induction, telle que celle qui est décrite par H.G. Doll, intitulée : "Introduction to induction logging and application to logging of wells drilled with oil based mud", Petroleum Transactions, pp. 148-162, 1949.

L'invention peut aussi s'appliquer au cas où la paroi du puits est en un matériau magnétique doux.

La connaissance de certains paramètres électriques ou magnétiques des formations géologiques (par exemple la résistivité électrique ou la perméabilité magnétique) est d'un très grand intérêt dans le domaine de l'exploration et de l'exploitation pétrolière. En particulier, dans le domaine de l'exploitation, la connaissance de l'interface eau-huile est primordiale. Dans le cas de puits utilisant des boues à l'huile, la technique par induction est la seule exploitable.

### Etat de l'art antérieur

En présence d'un tubage métallique d'un puits, il est nécessaire, pour effectuer des mesures par induction, de saturer le matériau métallique constitutif du tube, afin de le rendre transparent magnétiquement.

Le document US-A-5 038 107 décrit un dispositif de configuration générale axiale comprenant en particulier un saturateur avec concentreur de flux, ainsi que des ferrites de focalisation de l'induction. Ce dispositif présente un inconvénient important, lié à la configuration axiale, en ce sens qu'il nécessite l'utilisation d'un concentreur du flux magnétique de saturation, de façon à assurer un meilleur contact magnétique entre le saturateur et le tube. En outre, malgré l'utilisation de ce concentreur, cette configuration entraîne des pertes d'énergie magnétique importantes. Ceci pose problème du fait que l'énergie magnétique disponible à l'endroit où la mesure est effectuée est limitée. Enfin, l'efficacité d'un tel système est très dépendante du diamètre interne du tube et les irrégularités du diamètre entraînent toujours des perturbations sur la mesure.

Le document US-A-2 770 773 divulgue un dispositif selon le préambule de la présente revendication 1. Toutefois, la géométrie adoptée pour ce dispositif en rend la réalisation délicate.

La présente invention cherche à résoudre ces problèmes. En particulier, elle propose un dispositif de mesure à induction d'un milieu, en présence de la paroi, de forme sensiblement cylindrique, métallique et magnétique, d'un tube, comportant :
- des moyens pour saturer la paroi magnétique,
- des moyens permettant d'induire un signal dans un milieu situé au-delà de la paroi magnétique, par rapport au dispositif de mesure,
- des moyens de réception d'un signal réémis par le milieu, en réponse au signal induit précédemment,
les moyens pour saturer la paroi magnétique étant constitués par au moins deux circuits magnétiques destinés à être appliqués directement contre la paroi métallique, lors de la mesure par induction, caractérisé en ce que chaque circuit magnétique présente :
- une partie centrale en forme de plaque,
- deux parties latérales dont l'extrémité est prévue pour venir en contact avec la paroi intérieure du tube, suivant une zone parallèle à l'axe de ce tube.

Avec ce dispositif, il y a une force d'attraction magnétique directe entre la paroi métallique et les circuits magnétiques, ce qui permet de réduire les entrefers entre les saturateurs et le tube, et donc les pertes d'énergie magnétique nécessaires à la saturation du tubage.

En outre, du fait du contact magnétique direct paroi-saturateur, l'efficacité du dispositif de mesure selon l'invention ne dépend pas du diamètre interne du tube, ni des irrégularités qui peuvent affecter ce diamètre. En effet, dans le dispositif selon l'art antérieur, de telles irrégularités se traduisent inévitablement par des perturbations sur la mesure. Ces perturbations disparaissent avec l'utilisation d'un dispositif conforme à l'invention.

La partie centrale peut être constituée de tôles métalliques, et les parties latérales peuvent être constituées chacune par des tôles métalliques ou par des éléments métalliques faisant ressort. Ceci permet de résoudre le problème de l'adaptation du contact entre les parties latérales et la paroi lorsque cette dernière présente des irrégularités.

En outre, des découpes peuvent être pratiquées dans au moins une partie latérale, ces découpes assurant une adaptation encore meilleure de chaque circuit magnétique à la surface de la paroi du tube.

Selon un autre aspect, deux circuits magnétiques peuvent être disposés sensiblement parallèlement l'un à l'autre, les moyens d'induction et de détection étant situés entre ces deux circuits.

Selon un autre aspect, plusieurs ensembles de saturateurs, chacun étant constitué tel que décrit ci-dessus, peuvent être prévus, les différents ensembles étant disposés sur un axe commun, à une certaine distance l'un de l'autre, et des moyens d'excitation et de réception étant situés dans l'espace libre entre deux ensembles voisins.

Cette configuration permet de laisser plus d'espace à l'ensemble émetteur-récepteur, et également d'utiliser des circuits magnétiques plus volumineux, qui permettent d'injecter plus d'énergie magnétique dans la paroi à saturer. En effet, dans la configuration suivant laquelle les moyens d'émission et de réception sont situés entre deux circuits magnétiques, le volume disponible pour ces circuits est forcément limité. Si cette limitation pose problème, la configuration alternée saturateur-moyens de mesure-saturateur est particulièrement bien adaptée.

Deux circuits d'un même ensemble de saturateurs peuvent être alors disposés de façon à avoir une même orientation magnétique. Dans ce cas, les orientations magnétiques de deux ensembles voisins peuvent être à 180° l'une de l'autre, ou bien à 90° l'une de l'autre. On obtient alors une saturation de type axial.

Selon une variante, dans chaque ensemble de saturateur, les deux circuits magnétiques peuvent être disposés de façon à avoir une orientation magnétique opposée. On obtient alors une configuration radiale.

Enfin, dans un dispositif de mesure à induction, conforme à la présente invention, des moyens peuvent être prévus pour soumettre les saturateurs à une induction variable dans le temps. Il est ainsi possible de faire fonctionner le dispositif selon un mode de "hacheur" magnétique, ce qui permet d'améliorer le rapport signal/bruit de la mesure effectuée.

### Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
- les figures 1a et 1b représentent des vues en coupe et de dessus de saturateurs conformes à un premier mode de réalisation de l'invention, en situation dans un puits tubé,
- les figures 2a et 2b représentent un autre mode de réalisation d'un ensemble de saturateurs conformes à la présente invention, vus de dessus et de côté, dans un puits tubé,
- les figures 3a et 3b représentent deux variantes possibles des circuits magnétiques du saturateur selon le second mode de réalisation,
- la figure 4 représente un mécanisme pour écarter des saturateurs de la paroi,
- la figure 5 représente deux saturateurs, vus de côté, selon un second mode de réalisation, avec des bobines d'émission, de réception et de contre-réception,
- les figures 6a à 7b représentent deux autres configurations possibles pour les saturateurs et les moyens de mesure, qui sont alternés suivant un axe longitudinal.

### Description détaillé de modes de réalisation de l'invention

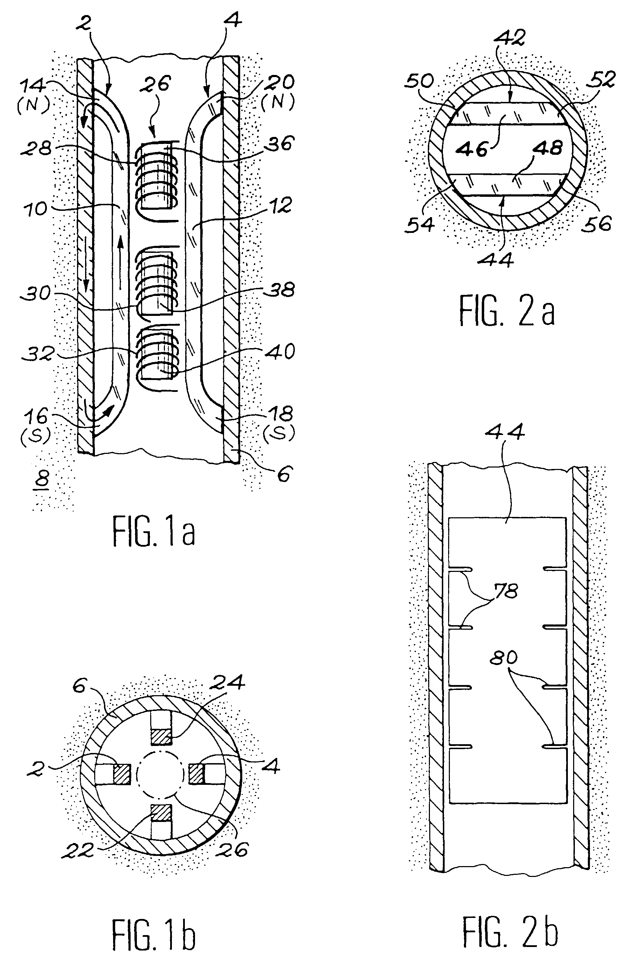

Selon un premier mode de réalisation de l'invention, qui va être décrit en liaison avec les figures 1a et 1b, un ensemble de saturateurs est constitué de deux circuits magnétiques 2, 4, disposés contre la paroi 6 métallique et magnétique du tubage d'un puits. Au-delà de cette paroi, se trouve un milieu 8 dont on cherche à mesurer des propriétés électriques et/ou magnétiques. Les deux éléments du saturateur de la figure 1a sont chacun constitués par une partie médiane longitudinale 10, 12, prolongée par deux extrémités latérales 14, 16, 18, 20 qui sont incurvées par rapport à la partie médiane, et qui sont terminées chacune par une surface destinée à être en contact avec la paroi métallique 6 du tubage.

Les parties médianes des circuits magnétiques sont parallèles entre elles. Elles sont constituées soit d'un matériau magnétique doux formant le noyau d'un électroaimant non représenté sur les figures, soit d'un matériau magnétique dur jouant le rôle d'aimant permanent, soit d'une combinaison des deux.

Le même dispositif est représenté sur la figure 1b, en vue de dessus, où l'on voit non plus seulement deux éléments d'un saturateur, mais quatre éléments, disposés à 90° l'un de l'autre. Selon une variante, non représentée, il est également possible de disposer ainsi six ou huit éléments de saturation, ou même plus, chaque élément ayant la forme représentée sur la figure 1a (une partie longitudinale et deux extrémités latérales incurvées par rapport à cette partie longitudinale), toutes les parties longitudinales étant parallèles entre elles, et les extrémités latérales étant toutes terminées par une surface destinée à être en contact avec la paroi métallique du tube 6.

Chaque circuit magnétique peut être soit un circuit alimenté par un électroaimant, ou un aimant permanent, par exemple en AlNiCo, ou une combinaison des deux.

Ce dispositif, du fait de l'existence d'une force d'attraction magnétique entre les éléments magnétiques 2, 4, 22, 24 et la paroi, permet de réduire les entrefers entre les saturateurs et le tube à pratiquement zéro, et par conséquent de réduire l'énergie magnétique nécessaire à la saturation de ce tube. En outre, tout effet perturbateur lié à une variation du diamètre du tube est supprimé.

Les moyens d'émission et de réception peuvent être par exemple des bobinages 28, 30, 32 disposés à l'intérieur d'un volume 26 de forme approximativement cylindrique, qu'il est possible de définir comme étant le volume qui vient s'appuyer sur les éléments longitudinaux des saturateurs, ces éléments longitudinaux définissant des génératrices dudit cylindre. Les bobinages d'induction 28 et de réception 30, 32 sont disposés, conformément à la figure 1a, en hauteur, approximativement suivant l'axe du cylindre 26. Dans cette configuration, le maximum de flux passe dans les espaces entre les saturateurs. Comme il est représenté sur la figure 1a, il est possible d'utiliser des focalisateurs 36, 38, 40 du flux de mesure, par exemple des noyaux en ferrite doux.

Selon un autre mode de réalisation, illustré sur les figures 2a et 2b, les éléments d'un ensemble de saturateurs sont constitués par deux circuits magnétiques 42, 44, chaque circuit présentant une partie centrale 46, 48 qui est sensiblement en forme de plaque, cette partie centrale étant prolongée par deux parties latérales 50, 52, 54, 56. L'extrémité de chacune de ces parties latérales est prévue pour venir en contact avec la paroi intérieure du tube, suivant une zone parallèle à l'axe du tube.

La partie centrale est constituée soit d'un matériau magnétique doux formant le noyau d'un électroaimant non représenté sur les figures, soit d'un matériau magnétique dur jouant le rôle d'aimant permanent, soit d'une combinaison des deux.

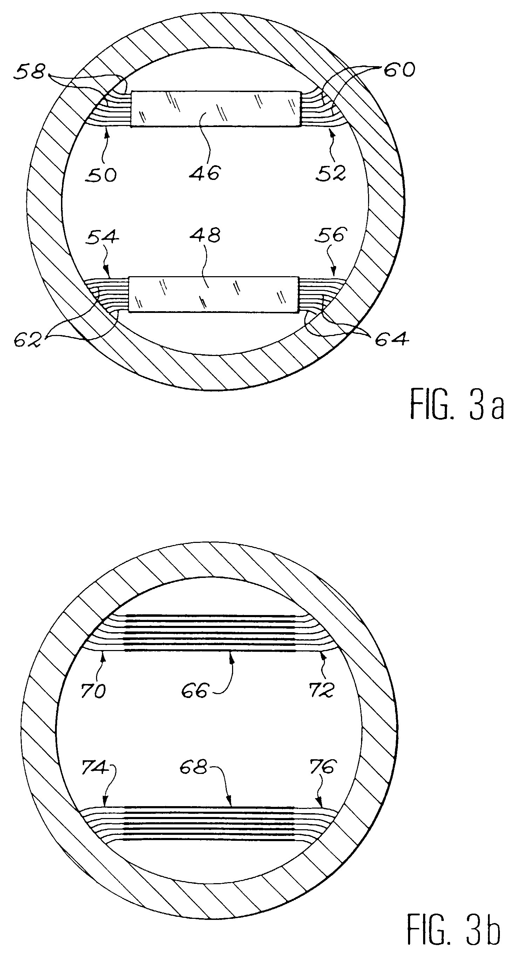

Comme illustré sur la figure 3a, les parties latérales 50, 52, 54, 56 peuvent être constituées par des tôles magnétiques 58, 60, 62, 64 présentant une certaine élasticité. L'utilisation de ces tôles permet de résoudre le problème du contact magnétique entre le circuit magnétique et la paroi du tube, lors de la présence d'irrégularités : l'élasticité des tôles permet aux extrémités des parties latérales de s'adapter aux différentes configurations de surface rencontrées.

Selon une variante, illustrée sur la figure 3b, la partie centrale, en forme de plaque 66, 68, peut elle-même être constituée de tôles magnétiques. Par ailleurs, la partie centrale peut être prolongée par des lamelles métalliques formant ressort 70, 72, 74, 76, qui permettent de canaliser le flux magnétique en direction de la paroi. Ces lamelles peuvent être constituées d'un seul matériau magnétique et élastique ou d'un empilage approprié de lamelles de deux types : un type étant en matériau doux et l'autre en un matériau élastique. En outre, comme illustré sur la figure 2b qui représente un élément d'un saturateur, vu de côté, des encoches ou découpes 78, 80 peuvent être prévues sur les côtés de chaque saturateur, de façon à assurer un meilleur contact avec la paroi, au cas où des irrégularités seraient présentes dans celle-ci.

Dans le second mode de réalisation (figures 2a à 3b), les polarités de deux éléments saturateurs disposés en face l'un de l'autre peuvent être opposées ou identiques, ce qui permet d'obtenir des chemins différents pour le flux magnétique.

Dans tous les cas, les moyens mécaniques peuvent être utilisés pour éloigner les saturateurs de la paroi lors de la descente ou de la remontée du dispositif dans le puits de forage. Dans le cas d'un électroaimant, il sera en outre possible de couper le courant d'alimentation du circuit magnétique lors de ces opérations de descente et de remontée.

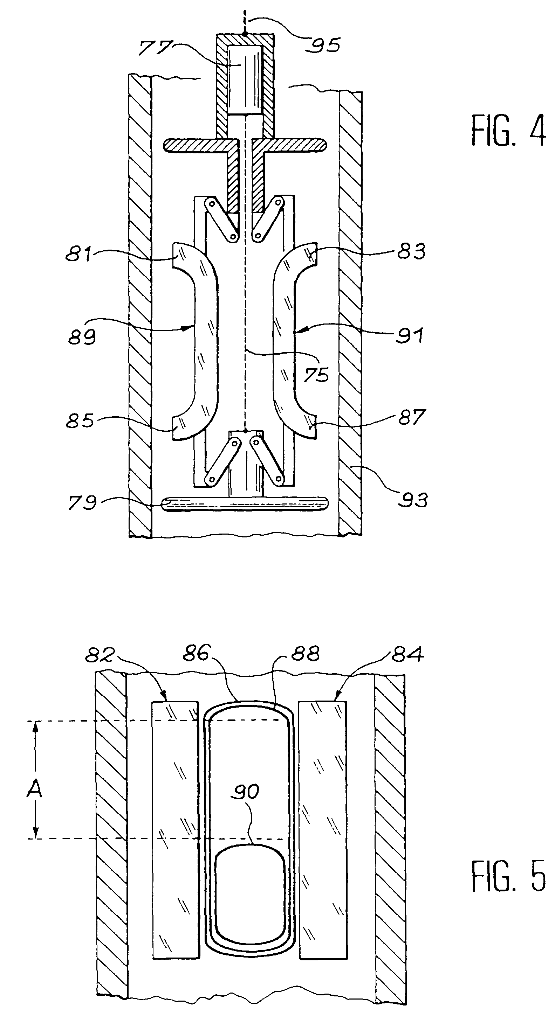

Un exemple d'un dispositif pour éloigner les circuits magnétiques de la paroi est illustré sur la figure 4. Un vérin électrique 77 permet de remonter un espaceur 79 par l'intermédiaire d'un câble 75. Le mouvement de remontée entraîne un repliement des bras 81, 83, 85, 87 et ramène les circuits 89, 91 vers l'axe de l'appareil et du tube 93 formant paroi. L'ensemble de l'appareil est suspendu à un câble 95. Les bobines d'induction et de mesure ne sont pas représentées sur la figure 4, mais peuvent être disposées comme illustré sur la figure 1a. Enfin, le même dispositif peut être utilisé pour des saturateurs selon le second mode de réalisation (figures 2a, 2b, 3a, 3b).

La figure 5 représente deux saturateurs 82, 84, du type en forme de plaque (second mode de réalisation). Ces deux éléments sont vus de côtés, et, entre eux, sont placés des moyens d'induction et de réception des signaux, par exemple un bobinage d'émission 86, dont l'axe est perpendiculaire à celui du tube, un bobinage de réception 88 et un bobinage de contre-réception 90, eux aussi orientés perpendiculairement à l'axe longitudinal du tube. La zone d'intérêt dans le milieu situé au-delà du tube est alors la zone désignée par la lettre A sur la figure 5.

Ce type de mesures, à l'aide d'un bobinage d'émission, d'un bobinage de réception et d'un bobinage de contre-réception permet, par différence, de supprimer l'effet du flux direct de la bobine d'émission sur la bobine de réception dans le signal détecté, ainsi qu'expliqué dans l'article de H.G. Doll, déjà cité ci-dessus en référence dans l'introduction à la présente demande. Le signal détecté est en quadrature avec le courant d'émission alternatif. Les bobinages de réception et de contre-réception sont sensibles à des volumes différents, et de fait, le signal de mesure est proportionnel à la conductivité du volume de la formation correspondant à la différence des volumes. En outre, le dispositif, selon l'un ou l'autre des deux modes de réalisation expliqués ci-dessus, peut comporter plusieurs bobinages de réception et de contre-réception de différentes hauteurs, ce qui permet d'obtenir différentes résolutions verticales liées à la différence de longueur des bobinages de réception et de contre-réception, ou différentes profondeurs d'investigation, liées à la longueur du bobinage d'émission.

La fréquence maximale utilisable avec un dispositif selon la présente invention est de l'ordre de quelques kilohertz. En principe, l'intensité du signal croît avec la fréquence, et cette dernière est limitée du fait de l'effet de peau. Pour des dimensions standards de tubage, l'épaisseur radiale du volume de mesure est de l'ordre de quelques dizaines de centimètres, la fréquence étant ainsi limitée à quelques kilohertz.

Dans le cas où le circuit magnétique du saturateur est formé en partie de tôles, comme sur les figures 3a et 3b, et afin de limiter l'effet de court-circuit dû à la présence de ces tôles au voisinage des bobinages d'émission et de réception, l'épaisseur des tôles est préférentiellement de l'ordre de 2 à 3 fois supérieure à l'épaisseur sur laquelle se manifeste l'effet de peau dans le matériau constitutif des tôles, à la fréquence d'utilisation du dispositif. Ainsi, pour une fréquence de 10 kilohertz, les tôles devront avoir une épaisseur de quelques millimètres.

Deux autres configurations du dispositif, dans le cas du second mode de réalisation expliqué ci-dessus (saturateur en forme de plaque prolongé par des parties latérales dont l'extrémité vient en contact avec la paroi intérieure du tube) sont illustrées sur les figures 6a à 7b.

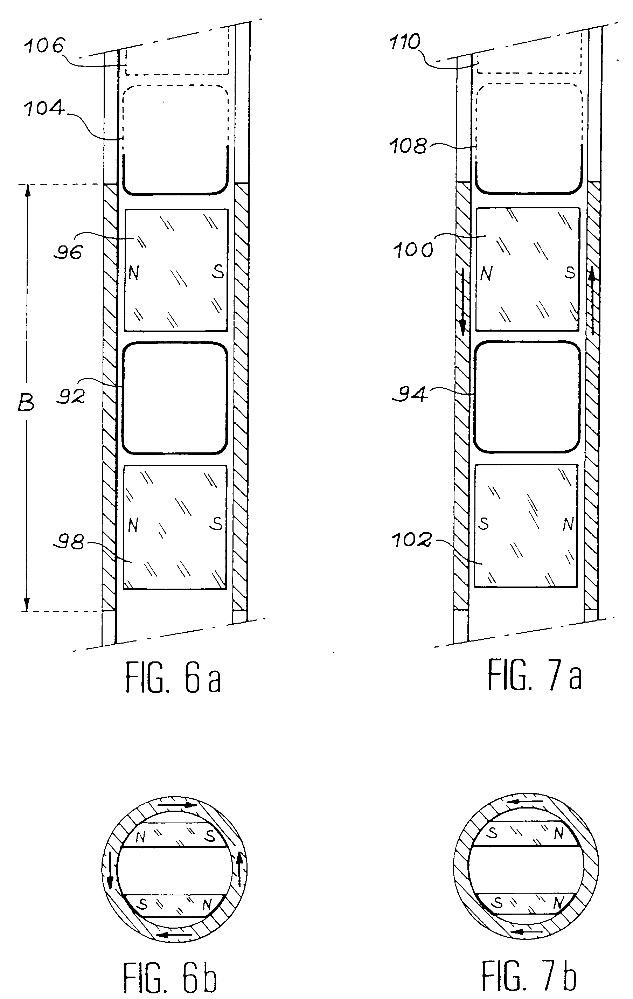

Sur ces figures, les références 92 et 94 représentent chacune, de façon globale, un ensemble comprenant des moyens d'induction et des moyens de réception d'un signal. Cet ensemble peut être par exemple une bobine d'induction et un couple de bobines réception-contre-réception. De part et d'autre de cet ensemble, suivant une direction longitudinale parallèle au tube, se trouve deux ensembles de saturation 96, 98, 100, 102. Ces ensembles sont constitués de manière analogue à ceux décrits en liaisons avec les figures 2a, 2b, 3a, 3b. A l'intérieur d'un même ensemble, les polarités des deux circuits magnétiques constitutifs de cet ensemble peuvent être soit opposées (voir figure 6b), soit parallèles (voir figure 7b).

Dans le cas des figures 6a et 6b, où les circuits magnétiques d'un même saturateur sont de polarités opposées, le champ magnétique de saturation résultant a une configuration radiale, comme indiqué par les flèches sur le pourtour du tube de la figure 6b. Dans le cas où un ensemble d'émission-détection 92 est entouré de deux ensembles de saturation 96, 98, la zone saturée du tube est alors celle désignée par la lettre B sur la figure 6a. Il est possible d'ajouter, par exemple au-dessus de l'ensemble de saturation 96, un autre ensemble d'émission-détection 104, puis un autre saturateur 106, lui-aussi constitué de deux circuits magnétiques dont les polarités sont orientées comme celles des saturateurs 96, 98. On augmente alors la taille de la zone saturée du tube.

Dans la version de la figure 7a, les ensembles de saturation 100, 102 sont chacun constitués par deux circuits magnétiques dont la polarité est orientée de façon identique. Il en résulte un champ de saturation ayant une configuration axiale, dont le sens de circulation est celui décrit par les flèches sur les figures 7a et 7b. De même que dans le cas précédent, il est possible d'ajouter, au-dessus de l'élément saturateur 100, un autre élément 108 d'émission-détection, puis encore un autre élément 110 de saturation, constitué de la même manière que les éléments 100, 102. Deux éléments de saturation voisins, par exemple les éléments 100 et 102 peuvent avoir, comme illustré sur la figure 7a des directions de polarisation orientées à 180° l'une de l'autre. Mais on peut également orienter les directions de polarisation à 90° l'une de l'autre, ou suivant tout autre angle. Il en résulte à chaque fois des chemins différents pour la circulation du flux de saturation magnétique, que l'homme du métier saura adapter suivant les circonstances.

Il est évidemment possible de généraliser cet enseignement à un nombre N d'ensembles de saturation alternés avec des ensembles d'induction-réception.

Les modes de réalisation décrits en liaison avec les figures 6a à 7b permettent de résoudre le problème de l'encombrement des saturateurs : lorsque l'énergie nécessaire pour saturer les parois est plus importante, il faut utiliser des saturateurs plus volumineux. Pour cela, on peut utiliser l'une des configurations étagées qui viennent d'être décrites.

Quel que soit le mode de réalisation choisi, les éléments de saturation, lorsqu'ils sont constitués par des électroaimants, peuvent être soumis ou bien à une induction constante, ou bien à une induction variable. Dans ce dernier cas, on fait passer le saturateur et la paroi située en regard d'un état non saturé à un état saturé, de façon alternative. Ceci revient à réaliser un "hacheur" magnétique, fonctionnant à une fréquence de quelques dizaines de hertz. Cette fréquence est limitée à cet ordre de grandeur, du fait de la puissance électrique limitée et de la constante de temps magnétique du tube. Le phénomène de hachage est accru du fait de la variation de l'entrefer avec la force d'attraction magnétique, liée à l'induction. Des moyens pour induire dans une bobine d'un électroaimant des impulsions de courant à une fréquence de quelques dizaines de hertz sont connus par ailleurs de l'homme du métier et ne seront pas plus détaillés. Ce mode de fonctionnement permet d'améliorer le rapport signal/bruit de la mesure. En effet, il est ainsi possible de réaliser alternativement une mesure avec un tube en état de saturation, puis une mesure avec un tube en état de non-saturation, et de faire ensuite la différence entre les deux séries de signaux mesurés, ce qui permet d'éliminer des parasites extérieurs.

## Revendications

1. Dispositif de mesure à induction d'un milieu (8), en présence de la paroi (6), de forme sensiblement cylindrique, métallique et magnétique, d'un tube, comportant :
- des moyens (2, 4; 22, 24; 42, 44) pour saturer la paroi magnétique,
- des moyens (28, 86) permettant d'induire un signal dans le milieu, au-delà de la paroi magnétique,
- des moyens de réception (30, 32; 88, 90) d'un signal réémis par le milieu, en réponse au signal induit précédemment,
les moyens pour saturer la paroi magnétique étant constitués par au moins deux circuits magnétiques destinés à être appliqués directement contre la paroi métallique, lors de la mesure par induction, caractérisé en ce que chaque circuit magnétique présente :
- une partie centrale (46, 48; 66, 68) en forme de plaque,
- deux parties latérales (50, 52, 54, 56; 70, 72, 74, 76) dont l'extrémité est prévue pour venir en contact avec la paroi intérieure du tube, suivant une zone parallèle à l'axe de ce tube.

2. Dispositif selon la revendication 1, la partie centrale étant constituée soit d'un matériau magnétique doux formant le noyau d'un électroaimant, soit d'un matériau magnétique dur jouant le rôle d'aimant permanent, soit d'une combinaison des deux.

3. Dispositif selon la revendication 1, la partie centrale (66, 68) étant constituée de tôles magnétiques.

4. Dispositif selon l'une des revendications 1 à 3, les parties latérales (50, 52, 54, 56) étant constituées chacune par des tôles magnétiques (58, 60, 62, 64).

5. Dispositif selon l'une des revendication 1 à 3, les parties latérales (70, 72, 74, 76) étant constituées par des éléments métalliques faisant ressort.

6. Dispositif selon l'une des revendications 1 à 5, des découpes (78, 80) étant pratiquées dans au moins une partie latérale d'au moins un circuit magnétique (44).

7. Dispositif selon l'une des revendications 1 à 6, les deux circuits étant disposés sensiblement parallèlement l'un à l'autre.

8. Dispositif selon la revendication 7, les moyens d'induction (86) et de détection (88, 90) étant disposés entre les deux circuits.

9. Dispositif selon la revendication 7, comportant au moins un autre ensemble (98, 106) de saturation conformément à la revendication 7, les différents ensembles (96, 98, 106) étant disposés sur un axe commun, à une certaine distance l'un de l'autre, des moyens d'induction et de réception (92) étant situés dans chaque espace libre entre deux ensembles voisins de saturation.

10. Dispositif selon la revendication 9, les deux circuits magnétiques étant, dans chaque ensemble de saturation, disposés de façon à avoir une même orientation magnétique.

11. Dispositif selon la revendication 10, les orientations magnétiques de deux ensembles voisins étant à 180° l'une de l'autre.

12. Dispositif selon la revendication 10, les orientations magnétiques de deux ensembles voisins étant à 90° l'une de l'autre.

13. Dispositif selon l'une des revendications 1 à 12, comportant en outre des moyens pour soumettre les saturateurs à une induction variable dans le temps, à une fréquence de quelques dizaines de hertz.

## Patentansprüche

1. Vorrichtung zur Induktionsmessung eines Mediums (8) bei Vorhandensein der im wesentlichen zylindrischen, metallischen und magnetischen Wand (6) eines Rohrs, umfassend:
- Einrichtungen (2, 4; 22, 24; 42, 44) um die magnetische Wand zu sättigen,
- Einrichtungen (28, 86), die ermöglichen, ein Signal in das Medium einzuspeisen, jenseits der magnetischen Wand,
- Einrichtungen (30, 32; 88, 90) zum Empfangen eines durch das Medium wiederausgesendeten Signals, als Antwort auf das vorhergehend eingespeiste Signal,
wobei die Einrichtungen zum Sättigen der magnetischen Wand durch wenigstens zwei Magnetkreise gebildet werden, die dazu bestimmt sind, bei der Induktionsmessung direkt an der metallische Wand eingerichtet zu werden,
**dadurch gekennzeichnet**,
dass jeder Magnetkreis umfasst:
- einen plattenförmigen Mittelteil ( 46, 48; 66, 68),
- zwei Seitenteile (50, 52, 54, 56; 70, 72, 74, 76), deren Ende dazu vorgesehen ist, mit der Innenseite des Rohr in Kontakt zu kommen, in einer zu der Achse dieses Rohrs parallelen Zone.

2. Vorrichtung nach Anspruch 1, wobei der Mittelteil durch ein weichmagnetisches Material gebildet wird, das den Kern eines Elektromagneten bildet, oder durch ein hartmagnetisches Material, das die Rolle des Permanentmagneten spielt, oder durch eine Kombination aus beiden.

3. Vorrichtung nach Anspruch 1, wobei der Mittelteil (66, 68) durch magnetische Bleche gebildet wird.

4. Vorrichtung nach einem der Ansprüche 1 bis 3, wobei die Seitenteile (50, 52, 54, 56) jeweils durch magnetische Bleche (58, 60, 62, 64) gebildet wird.

5. Vorrichtung nach einem der Ansprüche 1 bis 3, wobei die Seitenteile (70, 72, 74, 76) durch federnde metallische Elemente gebildet werden.

6. Vorrichtung nach einem der Ansprüche 1 bis 5, wobei Einschnitte (78, 80) in wenigstens einem Seitenteil wenigstens eines Magnetkreises (44) vorgesehen sind.

7. Vorrichtung nach einem der Ansprüche 1 bis 6, wobei die beiden Magnetkreise im wesentlichen parallel zueinander angeordnet sind.

8. Vorrichtung nach Anspruch 7, wobei die Induktions- und Detektionseinrichtungen (86; 88, 90) zwischen den beiden Magnetkreisen angeordnet sind.

9. Vorrichtung nach Anspruch 7 mit wenigstens einer weiteren dem Anspruch 7 entsprechenden Sättigungseinheit, wobei die verschiedenen Einheiten (96, 98, 106) mit einem bestimmten Abstand voneinander auf einer gemeinsamen Achse angeordnet sind und Induktions- Empfangseinrichtungen (92) sich in jedem freien Raum zwischen zwei benachbarten Sättigungseinheiten befinden.

10. Vorrichtung nach Anspruch 9, wobei die beiden Magnetkreise in jeder Sättigungseinheit so angeordnet sind, dass sie dieselbe magnetische Ausrichtung haben.

11. Vorrichtung nach Anspruch 10, wobei die magnetische Ausrichtung von zwei benachbarten Einheiten miteinander einen Winkel von 180° bilden.

12. Vorrichtung nach Anspruch 10, wobei die magnetischen Ausrichtungen von zwei benachbarten Einheiten miteinander einen Winkel von 90° bilden.

13. Vorrichtung nach einem der Ansprüche 1 bis 12, die außerdem Einrichtungen umfasst, um die Sättigungseinheiten einer zeitlich variablen Induktion auszusetzen, mit einer Frequenz von einigen Dekahertz.

## Claims

1. Device for the induction measurement of a medium, in the presence of the substantially cylindrical, metallic, magnetic wall (6) of a tube having:
- means (2, 4; 22, 24; 42, 44) for saturating the magnetic wall,
- means (28, 86) permitting the induction of a signal in the medium beyond the magnetic wall,
- means (30, 32; 88, 90) for receiving a signal retransmitted by the medium in response to the previously induced signal,
the means for saturating the magnetic wall being constituted by at least two magnetic circuits for direct application to the metal wall, during the measurement by induction, characterized in that each magnetic circuit has:
- a plate-like central portion (46, 48; 66, 68),
- two lateral portions (50, 52, 54, 56; 70, 72, 74, 76), whereof the end comes into contact with the inner wall of the tube, along a zone parallel to the axis of said tube.

2. Device according to claim 1, the central part being made either from a soft magnetic material forming the core of an electromagnet, or a hard magnetic material serving as a permanent magnet, or a combination of both.

3. Device according to claim 1, the central part (66, 68) being formed by magnetic sheets.

4. Device according to one of the claims 1 to 3, the lateral parts (50, 52, 54, 56) being in each case formed by magnetic sheets (58, 60, 62, 64).

5. Device according to one of the claims 1 to 3, the lateral parts (70, 72, 74, 76) being formed by metallic elements forming a spring.

6. Device according to one of the claims 1 to 5, cutouts (78, 80) being made in at least one lateral part of at least one magnetic circuit (44).

7. Device according to one of the claims 1 to 6, the two circuits being arranged substantially parallel to one another.

8. Device according to claim 7, the induction (86) and detection means (88, 90) being located between the two circuits.

9. Device according to claim 7 having at least one other saturation assembly (98, 106) according to claim 7, the different assemblies (96, 98, 106) being arranged according to a common axis, at a certain mutual distance, induction and reception means (92) being located in each free space between two neighbouring saturation assemblies.

10. Device according to claim 9, the two magnetic circuits being, in each saturation assembly, arranged so as to have the same magnetic orientation.

11. Device according to claim 10, the magnetic orientations of two adjacent assemblies being at 180° from one another.

12. Device according to claim 10, the magnetic orientations of two adjacent assemblies being at 90° of one another.

13. Device according to one of the claims 1 to 12, also having means for subjecting the saturators to a time-variable induction at a frequency of a few dozen hertz.
